# EUROPEAN PATENT APPLICATION

(11) **EP 3 112 248 A1**
(43) Date of publication of application: **04.01.2017**
(21) Application number: 15752537.9
(22) Date of filing: 16.02.2015
(51) Int. Cl.: B63B 25/16, F17C 9/00, B63H 21/38, F02M 21/02

(54) **SYSTEM AND METHOD FOR PROCESSING BOIL-OFF GAS**

(30) Priority: 24.02.2014 KR 20140021095
(71) Applicant: Daewoo Shipbuilding & Marine Engineering Co., Ltd., Seoul 100-180 (KR)
(72) Inventor: LEE, Chang Woo, Seoul 151-852 (KR); MOON, Young Sik, Gwangmyeong-si Gyeonggi-do 423-733 (KR); YOO, Byeong Yong, Seoul 151-015 (KR); KIM, Nak Hyun, Seongnam-si Gyeonggi-do 462-731 (KR)
(74) Representative: Intès, Didier Gérard André
(86) International application number: PCT/KR2015/001539
(87) International publication number: WO 2015/126116

(57) **Abstract**

Disclosed are a boil-off gas treatment system and method. The boil-off gas treatment system includes: a compressor compressing boil-off gas generated in a storage tank provided to a ship or a marine structure; a compressed gas heat exchanger disposed downstream of the compressor and performing heat exchange of the compressed boil-off gas with seawater or fresh water; and a boil-off gas heat exchanger disposed downstream of the compressed gas heat exchanger and performing heat exchanged of the compressed boil-off gas with boil-off gas to be supplied to the compressor.

## Description

### [Technical Field]

The present invention relates to a system and method for treatment of boil-off gas, and more particularly, to a boil-off gas treatment system which includes a compressor configured to compress boil-off gas generated in a storage tank of a ship or a marine structure, a compressed gas heat exchanger disposed downstream of the compressor and performing heat exchange of the compressed boil-off gas with seawater or fresh water, and a boil-off gas heat exchanger disposed downstream of the compressed gas heat exchanger and performing heat exchange of the compressed boil-off gas with boil-off gas to be supplied to the compressor.

### [Background Art]

Liquefied natural gas (LNG) is a colorless transparent liquid obtained by cooling natural gas mainly consisting of methane to about -163°C and has a volume of about 1/600 that of natural gas. Thus, natural gas is liquefied into LNG for efficient transportation and an LNG carrier is used for marine transportation of LNG.

Since liquefaction of natural gas occurs at a cryogenic temperature of about -163°C under ambient pressure, LNG is likely to be vaporized if the temperature of LNG increases slightly above -163°C under ambient pressure. Although an LNG storage tank provided to an LNG carrier, LNG-FPSO, RV, and the like is insulated, it is impossible to completely prevent heat ingress to LNG in the LNG storage tank, and thus, LNG is continuously vaporized to generate boil-off gas (BOG) in the LNG storage tank during storage of LNG in the LNG storage tank.

BOG is a kind of LNG loss and is treated as an important factor in transportation efficiency of LNG, and since excessive accumulation of BOG within the LNG storage tank can cause damage to the LNG storage tank through excessive increase in pressure of the LNG storage tank, various studies have been made to develop a method for treating BOG generated in the LNG storage tank.

Recently, for treatment of BOG, a method of returning BOG to the storage tank after reliquefaction of BOG, a method of using BOG as an energy source for ships, and the like are used. In addition, a method of burning excess BOG using a gas combustion unit (GCU) is used.

### [Disclosure]

### [Technical Problem]

Embodiments of the invention provide a system and method for efficient and stable treatment of boil-off gas (BOG) generated in a storage tank of a ship or a marine structure such as an LNG-RV or LNG-FSRU.

### [Technical Solution]

In accordance with one aspect of the present invention, there is provided a boil-off gas treatment system, which includes: a compressor compressing boil-off gas generated in a storage tank provided to a ship or a marine structure; a compressed gas heat exchanger disposed downstream of the compressor and performing heat exchange of the compressed boil-off gas with seawater or fresh water; and a boil-off gas heat exchanger disposed downstream of the compressed gas heat exchanger and performing heat exchanged of the compressed boil-off gas with boil-off gas to be supplied to the compressor.

The boil-off gas treatment system may further include: a recondenser recondensing the boil-off gas compressed by the compressor; a compressed gas supply line connected to the recondenser at a downstream side of the compressor and comprising the compressed gas heat exchanger and the boil-off gas heat exchanger; and a bypass line branched from the compressed gas supply line at a downstream side of the compressed gas heat exchanger to allow the further compressed boil-off gas to be supplied to the recondenser after bypassing the boil-off gas heat exchanger.

The boil-off gas treatment system may further include a first control valve disposed after a branch point of the bypass line from the compressed gas supply line and a second control valve provided to the bypass line, and temperature of the compressed boil-off gas introduced into the recondenser may be regulated by controlling the first and second control valves.

The boil-off gas treatment system may further include: an LNG supply line through which super-cooled LNG is supplied from the storage tank to the recondenser, and a transfer pump provided to the storage tank and pumping the LNG into the LNG supply line.

The boil-off gas treatment system may further include: a high pressure pump disposed downward of the recondenser and compressing the LNG; and a gasifier receiving the compressed LNG from the high pressure pump and gasifying the received LNG.

The boil-off gas treatment system may further include a gas line branched from the compressed gas supply line at a downstream side of the compressed gas heat exchanger and supplying the compressed boil-off gas to a gas consuming side of the ship or the marine structure.

The boil-off gas treatment system may further include: an in-line mixer disposed upstream of the compressor and cooling the boil-off gas to be supplied to the compressor by mixing the boil-off gas with LNG in the storage tank when the boil-off gas generated in the storage tank has high temperature.

The ship or the marine structure may include an LNG-RV (Regasification Vessel) and an LNG-FSRU (Floating Storage and Regasification Unit).

In accordance with another aspect of the present invention, there is provided a method of treating boil-off gas which includes: 1) compressing boil-off gas generated in a storage tank provided to a ship or a marine structure; 2) cooling the compressed boil-off gas; and 3) supplying super-cooled LNG from the storage tank to the compressed and cooled boil-off gas to recondense the boil-off gas, wherein, in 2) cooling the compressed boil-off gas, the compressed boil-off gas is cooled through heat exchange with boil-off gas that is generated in the storage tank and will be compressed.

### [Advantageous Effects]

In a boil-off gas treatment system according to embodiments of the invention, boil-off gas generated in a storage tank of a ship or a marine structure is compressed and cooled, and is then recondensed by cold heat of super-cooled LNG supplied from the storage tank, in which the compressed boil-off gas is cooled through heat exchange with boil-off gas that is generated in the storage tank and will be compressed.

Since such compressed boil-off gas is cooled by seawater or fresh water in the compressed gas heat exchanger and is then additionally cooled with boil-off gas to be supplied to the compressor before being introduced into the recondenser, condensation efficiency of boil-off gas in the recondenser can be improved, and since the compressed boil-off gas is cooled by cold heat of boil-off gas supplied from the storage tank, it is possible to reduce the amount of super-cooled LNG required for the recondenser.

In addition, when boil-off gas is treated by such a system, it is possible to secure stability by preventing increase in pressure of the storage tank and to reduce consumption of BOG in a GCU and the like.

### [Description of Drawings]

Fig. 1 is a schematic diagram of one example of a boil-off gas treatment system.
Fig. 2 is a schematic diagram of a boil-off gas treatment system according to one exemplary embodiment of the present invention.

### [Best Mode]

The above and other aspects, advantages and objects of the present invention will become apparent from the accompanying drawings and descriptions of the following exemplary embodiments of the present invention.

Hereinafter, exemplary embodiments of the present invention will be described in detail with reference to the accompanying drawings. Like components will be denoted by like reference numerals.

The following boil-off gas treatment system may be applied to a ship or a marine structure provided with an LNG storage tank in which boil-off gas is generated. For example, the boil-off gas treatment system may be applied to an LNG-RV (Regasification Vessel), an LNG-FSRU (Floating Storage Regasification Unit), and the like, which supplies natural gas to the land and the like through regasification of LNG.

Although it can vary depending upon capacity and external temperature of the storage tank, it is known in the art that the amount of BOG generated in the LNG storage tank ranges from 3 to 4 ton/h under laden conditions or ranges from 0.3 to 0.4 ton/h under ballast conditions in a ship having a capacity of 150,000 m³. Recently, since boil-off rate (BOR) tends to decrease due to improvement in insulation performance of ships, the generation amount of boil-off gas has been gradually decreased.

However, since the storage tank still generates a large amount of boil-off gas, there is a need for an effective boil-off gas treatment system in order to guarantee stability of the ship or the marine structure as well as stability of the storage tank without consumption of natural gas.

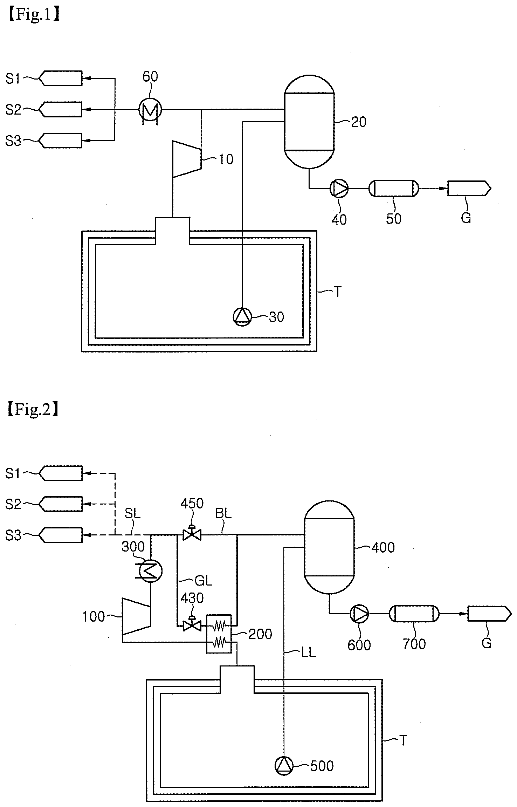

Fig. 1 is a schematic diagram of one example of a boil-off gas treatment system.

Referring to Fig. 1, the boil-off gas treatment system pumps and supplies LNG from a storage tank T to a recondenser 20 to supply natural gas to the land through a pump 40 and a gasifier 50 for compressing boil-off gas at high pressure, in which boil-off gas generated in the storage tank T is compressed by a compressor 10 and supplied to the recondenser 20. In the recondenser 20, the boil-off gas is recondensed by heat exchange with super-cooled LNG pumped from the storage tank T to the recondenser 20 by a pump 30 and is then supplied in a liquid state to the pump 40.

In such a system, since the temperature of boil-off gas is increased by compression, a large amount of boil-off gas requires a large amount of LNG in recondensation of the boil-off gas, and when the amount of LNG to be subjected to regasification is small, it is difficult to transfer sufficient cold heat to the boil-off gas.

Fig. 2 is a schematic diagram of a boil-off gas treatment system, which is developed to solve such problem, according to one exemplary embodiment of the invention.

Referring to Fig. 2, the boil-off gas treatment system according to this embodiment includes: a compressor 100 compressing boil-off gas generated in a storage tank T provided to a ship or a marine structure; a compressed gas heat exchanger 300 disposed downstream of the compressor 100 and performing heat exchange of the compressed boil-off gas with seawater or fresh water; a boil-off gas heat exchanger 200 disposed downstream of the compressed gas heat exchanger 300 and performing heat exchange of the compressed boil-off gas with boil-off gas to be supplied to the compressor 100; and a recondenser 400 recondensing the boil-off gas compressed by the compressor 100.

A compressed gas supply line GL connected from a downstream side of the compressor 100 to the recondenser 400 is provided with a compressed gas heat exchanger 300 and a boil-off gas heat exchanger 200, and a bypass line BL is branched from the compressed gas supply line GL at a downstream side of the compressed gas heat exchanger 300 to allow boil-off gas compressed through the bypass line BL to be supplied to the recondenser 400 after bypassing the boil-off gas heat exchanger 200.

The compressed gas supply line GL is provided with a first control valve 430 after a branch point of the bypass line BL, and the bypass line BL is provided with a second control valve 450. A flow rate of compressed boil-off gas flowing into the recondenser 400 through each of the compressed gas supply line GL and the bypass line BL is regulated by controlling the first and second control valves 430, 450, whereby the temperature of the compressed boil-off gas introduced into the recondenser 400 can be regulated.

For example, when a large amount of LNG will be supplied to the recondenser 400, the first control valve 430 is closed to allow the total amount of the compressed boil-off gas to be supplied to the recondenser 400 through the bypass line BL without passing through the boil-off gas heat exchanger 200.

In this case, since a large amount of super-cooled LNG is introduced into the recondenser 400, the compressed boil-off gas can be recondensed without passing through the boil-off gas heat exchanger 200, and since the boil-off gas is not heated through heat exchange in the boil-off gas heat exchanger 200 before introduction into the compressor 100, the temperature of the compressed boil-off gas is decreased at a downstream side of the compressor 100, thereby reducing load of the compressed gas heat exchanger 300.

When the boil-off gas generated in the storage tank T has a temperature of about -120°C, the boil-off gas compressed by the compressor 100 can be cooled to - 50°C to -100°C through the boil-off gas heat exchanger 200 via the compressed gas heat exchanger 300 and then can be supplied to the recondenser 400.

When introduced into the compressor 100, the boil-off gas generated in the storage tank T has increased temperature through heat exchange with the compressed boil-off gas. Then, the boil-off gas is compressed through the compressor 100, cooled in the compressed gas heat exchanger 300 through heat exchange with seawater or fresh water having a temperature of about 10°C to 40°C, and then additionally cooled in the boil-off gas heat exchanger 200.

On the other hand, super-cooled LNG is supplied from the storage tank T to the recondenser 400 through the LNG supply line LL. To this end, the storage tank T is provided with a transfer pump 500 which pumps the super-cooled LNG to the LNG supply line LL.

When the super-cooled LNG is pumped and supplied to the recondenser 400 by the transfer pump 500, the compressed and cooled boil-off gas is mixed with the super-cooled LNG to be recondensed into LNG in a liquid state.

A high pressure pump 600 and a gasifier 700 are disposed downstream of the recondenser 400 to compress and gasify LNG supplied from the recondenser 400 such that natural gas can be supplied to land (G).

A gas line SL is branched from the compressed gas supply line GL at a downstream side of the compressed gas heat exchanger 300 to supply the compressed boil-off gas to gas consuming sides S1, S2, S3 of the ship or the marine structure. Examples of such gas consuming sides may include a gas engine such as a DFDE or DFDG, a boiler, a GCU (Gas Combustion Unit), and the like.

When the ship or the marine structure is provided with a DFDE, pressure at a rear end of the compressor 100 is 5 to 10 bara, preferably 6 to 7 bara, and the pressure of the recondenser 400 may be 4.5 to 6 bara (3 to 5.5 barg).

The system may be operated such that the boil-off gas generated in the storage tank T can be supplied to and consumed by the gas consuming sides S1, S2, S3 of the ship or the marine structure through the gas line SL, and the remaining boil-off gas can be sent to the recondenser 400 to be recondensed by super-cooled LNG.

An in-line mixer (not shown) may be disposed upstream of the compressor 100. When the temperature of the boil-off gas is increased because a small amount of LNG is stored in the storage tank T, the boil-off gas is mixed with LNG in the storage tank T by the in-line mixer, whereby the boil-off gas can be supplied to the compressor 100 after being cooled.

It is apparent to those skilled in the art that the present invention is not limited to the above embodiments and various modifications or variations can be made without departing from the scope of the present invention.

## Claims

1. A boil-off gas treatment system comprising:
a compressor compressing boil-off gas generated in a storage tank provided to a ship or a marine structure;
a compressed gas heat exchanger disposed downstream of the compressor and performing heat exchange of the compressed boil-off gas with seawater or fresh water; and
a boil-off gas heat exchanger disposed downstream of the compressed gas heat exchanger and performing heat exchanged of the compressed boil-off gas with boil-off gas to be supplied to the compressor.

2. The boil-off gas treatment system according to claim 1, further comprising:
a recondenser recondensing the boil-off gas compressed by the compressor;
a compressed gas supply line connected to the recondenser at a downstream side of the compressor and provided with the compressed gas heat exchanger and the boil-off gas heat exchanger; and
a bypass line branched from the compressed gas supply line at a downstream side of the compressed gas heat exchanger to allow the further compressed boil-off gas to be supplied to the recondenser after bypassing the boil-off gas heat exchanger.

3. The boil-off gas treatment system according to claim 2, further comprising:
a first control valve disposed after a branch point of the bypass line from the compressed gas supply line; and
a second control valve provided to the bypass line,
wherein temperature of the compressed boil-off gas introduced into the recondenser is regulated by controlling the first and second control valves.

4. The boil-off gas treatment system according to claim 2, further comprising:
an LNG supply line through which super-cooled LNG is supplied from the storage tank to the recondenser; and
a transfer pump provided to the storage tank and pumping the LNG into the LNG supply line.

5. The boil-off gas treatment system according to claim 4, further comprising:
a high pressure pump disposed downward of the recondenser and compressing the LNG; and
a gasifier receiving the compressed LNG from the high pressure pump and gasifying the received LNG.

6. The boil-off gas treatment system according to claim 2, further comprising:
a gas line branched from the compressed gas supply line at a downstream side of the compressed gas heat exchanger and supplying the compressed boil-off gas to a gas consuming side of the ship or the marine structure.

7. The boil-off gas treatment system according to claim 1, further comprising:
an in-line mixer disposed upstream of the compressor and cooling the boil-off gas to be supplied to the compressor by mixing the boil-off gas with LNG in the storage tank when the boil-off gas generated in the storage tank has high temperature.

8. The boil-off gas treatment system according to claim 1, wherein the ship or the marine structure is one of an LNG-RV (Regasification Vessel) and an LNG-FSRU (Floating Storage and Regasification Unit).

9. A method of treating boil-off gas comprising:
1) compressing boil-off gas generated in a storage tank provided to a ship or a marine structure;
2) cooling the compressed boil-off gas; and
3) supplying super-cooled LNG from the storage tank to the compressed and cooled boil-off gas to recondense the boil-off gas,
wherein, in 2) cooling the compressed boil-off gas, the compressed boil-off gas is cooled through heat exchange with boil-off gas that is generated in the storage tank and will be compressed.
